**Europäisches Patentamt**

**European Patent Office**

**Office européen des brevets**

(19)

(11) Veröffentlichungsnummer: **0 010 644**
**B1**

(12)

# EUROPÄISCHE PATENTSCHRIFT

(45) Veröffentlichungstag der Patentschrift:
**16.03.83**

(51) Int. Cl.³: **G 01 D 15/12**, G 11 B 5/02

(21) Anmeldenummer: **79103828.4**

(22) Anmeldetag: **06.10.79**

(54) **Löscheinrichtung für einen Aufzeichnungsträger, welcher unter Verwendung eines magnetisch wirksamen Registrierorgans visuell erkennbare Aufzeichnungen gestattet.**

(30) Priorität: **03.11.78 DE 2847682**

(43) Veröffentlichungstag der Anmeldung:
**14.05.80 Patentblatt 80/10**

(45) Bekanntmachung des Hinweises auf die Patenterteilung:
**16.03.83 Patentblatt 83/11**

(84) Benannte Vertragsstaaten:
**CH DE FR GB IT**

(56) Entgegenhaltungen:
**DE-A-2016475**
**DE-A-2520581**
**DE-A-2530119**
**DE-B-1673997**

(73) Patentinhaber: **Kienzle Apparate GmbH,
Heinrich-Hertz-Strasse Postfach 1650,
D-7730 Villingen-Schwenningen (DE)**

(72) Erfinder: **Fichter, Manfred, Aigenstrasse 8,
D-7744 Königsfeld (DE)**

## Löscheinrichtung für einen Aufzeichnungsträger, welcher unter Verwendung eines magnetisch wirksamen Registrierorgans visuell erkennbare Aufzeichnungen gestattet

Die Erfindung betrifft eine Löscheinrichtung für einen Aufzeichnungsträger, welcher unter Verwendung eines magnetisch wirksamen Registrierorgans visuell erkennbare Aufzeichnungen gestattet, mit wenigstens einem als Löschmagnet dienenden Dauermagneten, dessen Träger derart angeordnet ist, dass der Dauermagnet unmittelbar über dem Aufzeichnungsträger und quer zu dessen Transportrichtung bewegbar ist und die Zuordnung des Dauermagneten zum Träger derart gewählt ist, dass die Magnetachse in einer zum Aufzeichnungsträger parallelen Ebene liegt und die Bewegung des Dauermagneten im wesentlichen in der Richtung der Magnetachse erfolgt.

Es sei vorausgesetzt, dass bei Verwendung eines derartigen Aufzeichnungsträgers die hinsichtlich des Registrierens möglichen Verfahrensvarianten sowie Struktur und Wirkverhalten des Aufzeichnungsträgermaterials hinreichend bekannt sind. Ebenso ist es, wie auch aus der DE-A-2520581 hervorgeht, bekannt, dass ein wesentliches Problem bei der Benutzung eines solchen Aufzeichnungsträgers darin zu sehen ist, den Aufzeichnungsträger bzw. die auf ihm aufgezeichnete dunkle Registrierlinie «hell» zu löschen, so dass nachfolgend wieder eine dunkle Registrierspur auf einer hellen Registrierfläche aufgezeichnet werden kann. Bekannt ist ferner der engere Anwendungsbereich dieses und ähnlicher Registrierverfahren. Er umfasst Registrieraufgaben, bei denen lediglich die Entwicklung einer Messgrösse unmittelbar vor einem bestimmten Ereignis interessiert und auf ältere Aufzeichnungen verzichtet werden kann. Diese Beschränkung erlaubt eine Dehnung der Aufzeichnungen und somit eine bessere Auflösung der zu überwachenden Messgrösse und vermeidet einen stetigen Bedarf an Aufzeichnungsträgermaterial.

Als typisches Beispiel für eine solche Registrieraufgabe sei die Unfalldatenerfassung, insbesondere das Aufzeichnen der Geschwindigkeit eines Kraftfahrzeuges über der von dem Kraftfahrzeug zuletzt zurückgelegten Strecke erwähnt.

Ein für diese Registrieraufgabe geeignetes Registriergerät ist verständlicherweise rauhen Betriebsbedingungen ausgesetzt und muss, was die Fremdfeld- und Stossempfindlichkeit sowie die Temperaturempfindlichkeit anbelangt, entsprechend konzipiert sein. Das spezielle Anwendungsgebiet verlangt darüber hinaus ein Gerät, welches aufgrund seiner weiträumigen Verbreitung über einen langen Zeitraum bei absolut verlässlicher Funktion wartungsfrei arbeitet, möglichst ohne Hilfsenergien betriebsbereit und ohne besondere Kenntnisse einbaufähig ist. Das bedeutet ferner Handlichkeit und weitgehende Unabhängigkeit vom Einbauort im Kraftfahrzeug. Auf der anderen Seite sind für ein solches Gerät die Bedingungen der Grossserienfertigung zu beachten, d. h. montagefreundlicher Aufbau, geringer Bauteileaufwand und Verwendung von Einfachstbauteilen.

Wird nun für ein solches Registriergerät ein Aufzeichnungsträger der eingangs erwähnten Art vorgesehen und eine «Hell»-Löschung der Aufzeichnungen angestrebt, so können die für die Löschung bisher empfohlenen Mittel den oben genannten Bedingungen nicht gerecht werden. Diesen Empfehlungen gemäss wird ein optimaler Löscheffekt nämlich erst dann erreicht, wenn zwei Magnetfelder, vorzugsweise zwei magnetische Wechselfelder, in der Ebene des Aufzeichnungsträgers wirksam werden. Dabei sollen die Wirkungsrichtungen der Magnetfelder die Richtung der Transportbewegung des Aufzeichnungsträgers kreuzen und in jedem zu löschenden Bereich des Aufzeichnungsträgers im wesentlichen rechtwinklig zueinander wirksam sein. Dementsprechende Löscheinrichtungen weisen relativ aufwendig gebaute Elektromagnete auf, die vorzugsweise mit Wechselstrom erregt werden und allein schon ihrer Grösse wegen, die dadurch bedingt ist, dass sie den Aufzeichnungsträger wenigstens teilweise umgreifen, für das genannte Anwendungsgebiet ungeeignet sind.

Eine im allgemeinen zufriedenstellende Löschung ist beispielsweise aber auch dann erzielbar, wenn der Aufzeichnungsträger im Feld eines einzelnen Elektromagneten derart bewegt wird, dass der den Wirkungsbereich des Elektromagneten jeweils verlassende Bereich des Aufzeichnungsträgers ausschliesslich von Feldlinien durchsetzt ist, die in der Ebene des Aufzeichnungsträgers verlaufen oder nur wenig gegenüber dieser geneigt sind.

Diese Erkenntnis erlaubt, wie die DE-A-2530092 zeigt, Löscheinrichtungen mit einem baulich wesentlich kleineren Elektromagneten, der quer zur Transportrichtung des Aufzeichnungsträgers bewegbar angeordnet ist, wobei dessen Magnetachse in einer zum Aufzeichnungsträger parallelen Ebene liegt, und die Bewegung des Elektromagneten im wesentlichen in der Richtung der Magnetachse erfolgt.

Solche Löscheinrichtungen mit einem oder mehreren bewegten Elektromagneten bieten zwar gegenüber den bereits erwähnten statischen Löscheinrichtungen sowohl hinsichtlich ihres Raumes auch hinsichtlich ihres Energiebedarfs gewisse Vorteile, sie erfordern aber aufwendige Antriebsmittel und geeignete elektrische Verbindungen in Form von Schleifkontakten, die bekanntlich verschleissanfällig sind und Wartungsaufwand erforderlich machen. Für den angestrebten Zweck, d. h. für ein in einem Kraftfahrzeug einsetzbares Registriergerät, sind daher auch die in den genannten DE-A-2530092 dargestellten Löscheinrichtungen denkbar ungeeignet, zumal ihre Funktion von der Stromversorgung abhängig ist.

Gleiches gilt auch für die in der DE-A-2530119 dargestellten Lösungen mit schwingend oder stetig bewegten Dauermagneten, d. h. es werden dort ebenfalls aufwendige und von der Stromversorgung abhängige Antriebsmittel für als Löschorgan dienende Dauermagnete vorgeschlagen, so dass von einer Eignung für ein in einem Kraftfahrzeug verwendbares und in grossen Serien herstellbares Registriergerät nicht die Rede sein kann.

Somit war es das Ziel der vorliegenden Erfindung, für einen Aufzeichnungsträger, welcher unter Verwendung eines magnetisch wirksamen Registrierorgans visuell erkennbare Aufzeichnungen gestattet, eine Löscheinrichtung zu schaffen, die die offensichtlichen Nachteile bisher bekannter Löscheinrichtungen vermeidet, insbesondere aber deren Fertigungs- und Montageaufwand sowie deren Funktionssicherheit den Bedingungen eines in Grossserie herstellbaren und im Kraftfahrzeug einbaufähigen Registriergerätes angepasst sind.

Die Lösung dieser Aufgabe, die davon ausgeht, dass als Löschmagnet ein Dauermagnet Anwendung findet, sieht vor, dass der Träger des Dauermagneten getrieblich mit dem Antriebsorgan des Aufzeichnungsträgers verbunden ist.

Ein vorteilhaftes Ausführungsbeispiel der Erfindung ist dadurch gekennzeichnet, dass der Träger des Dauermagneten derart gelagert und angetrieben ist, dass er eine schwingende Bewegung ausführt.

Ein bevorzugtes Ausführungsbeispiel sieht vor, dass als Dauermagnet eine Scheibe aus magnetisierbarem Material Anwendung findet, dass am Umfang der Scheibe wenigstens ein Polpaar ausgebildet ist und dass die Scheibe mit einem rotierenden, in der Antriebsverbindung des Aufzeichnungsträgers befindlichen Getriebeteil zentrisch verbunden ist.

Die erfindungsgemässe Lösung bietet gegenüber den bekannten, bestenfalls für Laborgeräte verwendbaren Löscheinrichtungen ein Minimum an Raum- und Bauelementbedarf sowie absolute Wartungsfreiheit. Vorteilhaft ist ferner, dass handelsübliche Dauermagnete einsetzbar sind und somit eine hohe Funktionssicherheit auch bei den in einem Kraftfahrzeug gegebenen Betriebsbedingungen gewährleistet ist, dass der messwertabhängige Antrieb des Registriergerätes auch für die Betätigung der Löscheinrichtung genutzt wird und dass für deren Funktion keine Hilfsenergie erforderlich ist. Somit eignet sich die erfindungsgemässe Lösung insbesondere für ein Registriergerät, das in einem Kraftfahrzeug Anwendung finden soll.

Die Erkenntnis, dass eine gut lesbare Registrierung auch dann erzielbar ist, wenn der Löschzustand des Aufzeichnungsträgers optisch zwischen den Extremen «hell» und «dunkel» liegt, demnach als «grau» angesprochen werden kann, und als Registrierorgan eine Anordnung gemäss der DE-OS 2520581 vorgesehen wird, die eine absolut dunkle, beiderseits von hellen Säumen eingerahmte Schreibspur liefert, führt letztlich zu dem hinsichtlich Antriebs- und Bauteileaufwand besonders vorteilhaften Ausführungsbeispiel mit einem rotierenden, scheibenförmigen Dauermagneten.

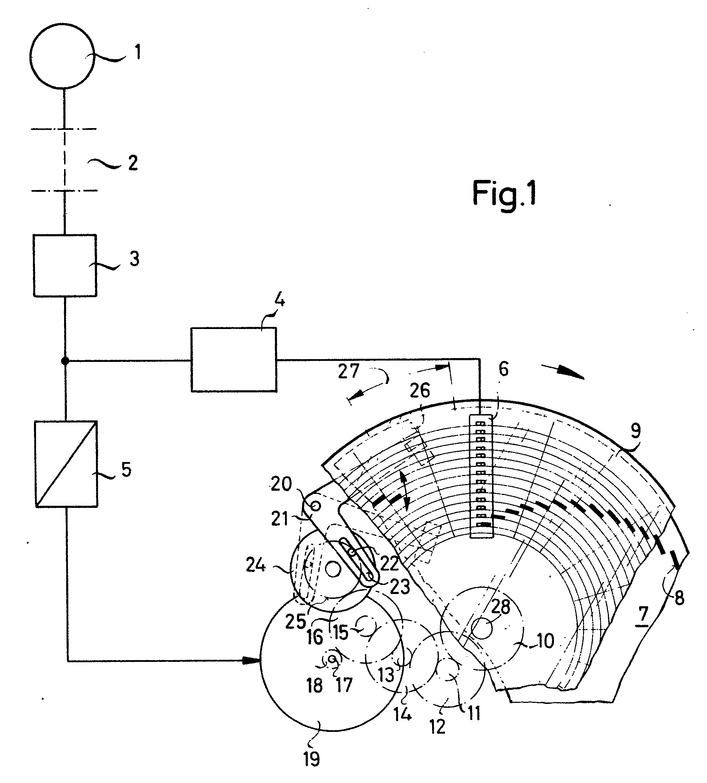

Die Prinzipdarstellung – Fig. 1 – zeigt eine Registrieranordnung, bei der zum Aufzeichnen der gefahrenen Geschwindigkeiten eines Kraftfahrzeuges über einer bestimmten, von diesem Kraftfahrzeug zuletzt zurückgelegten Strecke und zum fortlaufenden Löschen dieser Aufzeichnungen ein Aufzeichnungsträger der genannten Art sowie eine Ausführungsvariante der erfindungsgemässen Löscheinrichtung Anwendung finden.

Die Verarbeitung der Messgrössen erfolgt bei dieser Registrieranordnung elektronisch, und zwar liefert ein Geber 1 über eine Leitung 2 streckenproportional Impulse an einen geräteinternen Impulsformer 3, dessen Ausgangsimpulse einerseits am Eingang einer Geschwindigkeitsmessschaltung 4, andererseits am Eingang einer Impulsteilerschaltung 5, deren Funktionen in diesem Zusammenhang, da sie nicht erfindungswesentlich sind, nicht näher erläutert zu werden brauchen, anstehen. Der Geschwindigkeitsmessschaltung 4 ist ein Registrierkamm 6 mit einer Vielzahl nicht näher bezeichneter Registrierelemente nachgeschaltet. Diese werden entsprechend den von der Geschwindigkeitsmessschaltung 4 gelieferten Signalen bestromt und zeichnen auf dem Aufzeichnungsträger 7, der im dargestellten Falle streckenabhängig in Pfeilrichtung angetrieben wird, Diagrammelemente auf, von denen eines mit 8 bezeichnet ist. Dem Aufzeichnungsträger 7 ist eine Skalenscheibe 9 als Träger bzw. Auflage zugeordnet, an dem der Aufzeichnungsträger 7 in geeigneter, nicht dargestellter Weise befestigt ist. Dieser Träger 9, der auf einer Achse 28 drehbar gelagert ist, wird über einen Getriebezug 10, 11, 12, 13, 14, 15 und 16 und ein auf der Motorwelle 17 angeordnetes Ritzel 18 von einem Schrittmotor 19 streckenabhängig angetrieben, wobei der Schrittmotor 19 durch geeignete von der Teilerschaltung 5 gelieferte Impulse gesteuert wird. Gleichzeitig wird ein auf der Achse 20 gelagerter Winkelhebel 21 über eine Stift-Schlitz-Verbindung 22/23, eine Scheibe 24 und ein mit dieser fest verbundenes Zahnrad 25, das mit dem Zahnrad 16 kämmt, in eine Schwingbewegung versetzt, so dass ein an dem einen Schenkel des Winkelhebels 21 befestigter Stabmagnet 26 über dem Aufzeichnungsträger 7 quer zu dessen Transportrichtung hin und her bewegt wird und die auf dem Aufzeichnungsträger 7 befindlichen Aufzeichnungen in einem gewissen, mit 27 gekennzeichneten Sektor, gelöscht werden. Dabei ist, wie bereits eingangs beschrieben wurde, das im wesentlichen in der Ebene des Aufzeichnungsträgers 7 befindliche Streufeld des Stabmagneten 26 wirksam.

Der Vervollständigung halber sei noch erwähnt, dass an Stelle des Registrierkammes 6 ein Stellmotor zusammen mit einem von diesem angetriebenen, als Schlitten bzw. Schwenkhebel ausgebildeten Träger für ein Registrierorgan gemäss der DE-OS 2520281 vorgesehen werden kann.

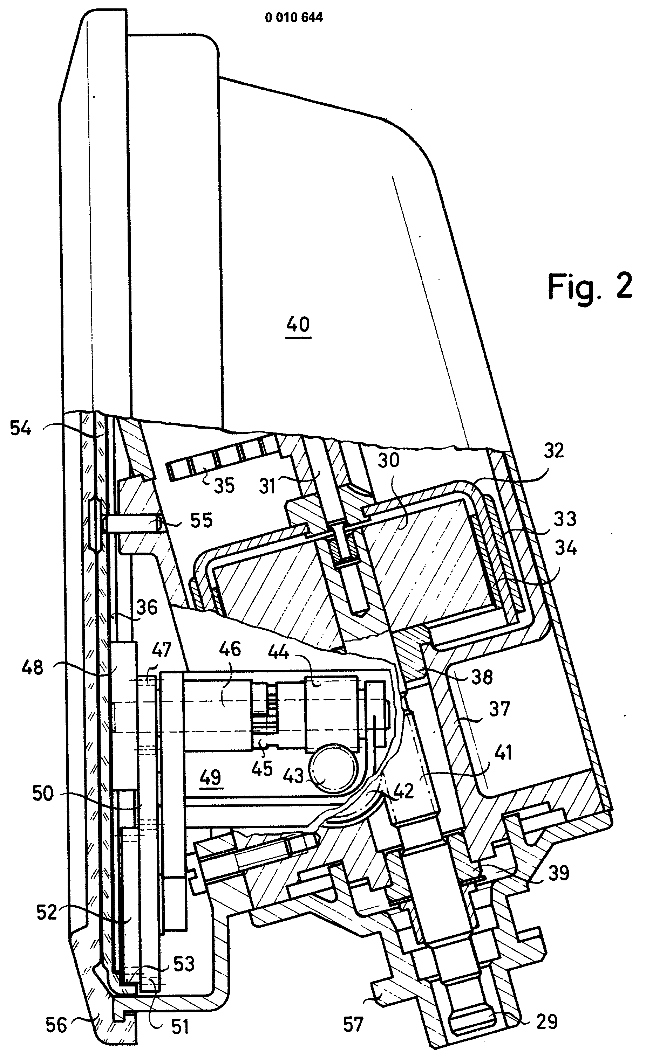

Das bevorzugte Ausführungsbeispiel – Fig. 2 – ist demgegenüber hinsichtlich der Geschwindigkeitsmessung mit einem herkömmlichen Wirbelstrommesswerk ausgerüstet und wird in an sich bekannter Weise von einer nicht dargestellten biegsamen Antriebswelle angetrieben. Hierzu dient eine Welle 29, die in geeigneter Weise mit der biegsamen Antriebswelle gekoppelt ist und den Dauermagneten 30 des Wirbelstrommesswerkes trägt. Auf einer Messwerkwelle 31, deren eines Wellenende in der üblichen Weise in der Welle 29 gelagert ist, ist eine den Dauermagneten 30 lose umschliessende Wirbelstromglocke 32, die ihrerseits einen magnetischen Rückschlussring 33, sowie einen Temperaturkompensationsring 34 trägt, befestigt. Bekanntlich umfasst ein Wirbelstrommesswerk eine Spiralfeder 35, die dem Messmoment das Vergleichs- bzw. Gegendrehmoment liefert und deren inneres Ende ebenfalls auf der Messwerkwelle 31 befestigt ist. Ferner trägt die Messwerkwelle ein Zahnrad, das, weil nicht erfindungswesentlich, nicht mehr im einzelnen dargestellt ist und das bekanntlich mit den ebenfalls nicht mehr dargestellten Registriermitteln, beispielsweise einem Schlitten, an dem das eigentliche Registrierorgan befestigt ist, in Eingriff steht und quer zur Transportrichtung des Aufzeichnungsträgers 36 bewegbar ist.

An der Welle 29, die in einem Messwerkgehäuse 37, das seinerseits in das Gehäuse 40 des Registriergerätes einsetzbar ist, gelagert ist (Lagerbuchsen 38, 39) ist eine Schnecke 41 ausgebildet. Ein mit 57 bezeichneter und am Messwerkgehäuse 37 befestigter Flansch dient der Befestigung des Führungsschlauches der biegsamen Antriebswelle. Die Schnecke 41 steht in Eingriff mit einem Schneckenrad 42 auf dessen nicht bezeichneter, in einem geeigneten Gestell 49 gelagerten Welle eine weitere Schnecke 43 ausgebildet ist. Über ein mit der Schnecke 43 in Eingriff stehendes Schneckenrad 44 wird unter Zwischenschaltung eines Gesperrs 45 eine Welle 46 angetrieben, mit der ein Zahnrad 47 und eine vorzugsweise als ein mehrpoliger, am Umfang magnetisierter Dauermagnet ausgebildete Magnetscheibe 48 fest verbunden sind, und die ebenfalls in dem Gestell 49 gelagert ist. Das Zahnrad 47 steht über ein Zwischenrad 50 in Eingriff mit einem weiteren Zahnrad 51, dem gleichachsig ein Zahnrad 52 zugeordnet ist. Dieses greift in die Innenverzahnung 53 einer durchsichtigen Scheibe 54 ein, die auf einer Achse 55 drehbar gelagert ist, vorzugsweise eine geeignete Skalierung trägt und als Träger bzw. Auflage für den Aufzeichnungsträger 36 dient, der in geeigneter Weise mit der Scheibe 54 verbunden ist. Ein mit 56 bezeichneter Deckel aus ebenfalls durchsichtigem Material schliesst das Registriergerät frontseitig ab.

**Patentansprüche**

1. Löscheinrichtung für einen Aufzeichnungsträger, welcher unter Verwendung eines magnetisch wirksamen Registrierorgans visuell erkennbare Aufzeichnungen gestattet, mit wenigstens einem als Löschmagnet dienenden Dauermagneten, dessen Träger derart angeordnet ist, dass der Dauermagnet unmittelbar über dem Aufzeichnungsträger und quer zu dessen Transportrichtung bewegbar ist und die Zuordnung des Dauermagneten zum Träger derart gewählt ist, dass die Magnetachse in einer zum Aufzeichnungsträger parallelen Ebene liegt und die Bewegung des Dauermagneten im wesentlichen in der Richtung der Magnetachse erfolgt, dadurch gekennzeichnet, dass der Träger des Dauermagneten getrieblich mit dem Antriebsorgan (19, 41) des Aufzeichnungsträgers (7, 36) verbunden ist.

2. Löscheinrichtung nach Anspruch 1, dadurch gekennzeichnet, dass der Träger (21) des Dauermagneten (26) derart gelagert und angetrieben ist, dass er eine schwingende Bewegung ausführt.

3. Löscheinrichtung nach Anspruch 1, dadurch gekennzeichnet, dass der Träger (21) des Dauermagneten (26) drehbar gelagert ist.

4. Löscheinrichtung nach den Ansprüchen 1 und 3, dadurch gekennzeichnet, dass als Dauermagnet eine Scheibe (48) aus magnetischem Material Anwendung findet, dass am Umfang der Scheibe (48) wenigstens ein Polpaar ausgebildet ist und dass die Scheibe (48) mit einem rotierenden, in der Antriebsverbindung des Aufzeichnungsträgers (36) befindlichen Getriebeteil (46) zentrisch verbunden ist.

**Claims**

1. Deleting device for a record carrier which allows for visually recognizable recordings by using magnetically operating recording means comprising at least one permanent magnet serving as a deleting magnet the carrier of which is arranged so that the permanent magnet is movable immediately above the record carrier and transverse to its transport direction and in which the permanent magnet is attributed to the carrier in such way that the magnetic axis thereof is in a plane parallel to the record carrier the movement of the permanent magnet being essentially in the direction of the magnetic axis, characterized in that the carrier of the permanent magnet is in driving connection with the driving means (19, 41) of the record carrier (7, 36).

2. Deleting device according to claim 1, characterized in that the carrier (21) of the permanent magnet (26) is fastened and driven so that it makes an oscillating movement.

3. Deleting device according to claim 2, characterized in that the carrier (21) of the permanent magnet (26) is rotatably mounted.

4. Deleting device according to claims 1 and 3, characterized in that as a permanent magnet a disk (48) of magnetic material is used, that at the circumference of the disk (48) there is at least one pair of poles and that the disk (48) is centrically connected with a rotating driving part (36) as part of the driving gearing of the record carrier (46).

**Revendications**

1. Dispositif d'effacement pour un support d'enregistrement qui permet, par l'utilisation d'un organe enregistreur à action magnétique, d'obtenir des enregistrements visuellement perceptibles, avec au moins un aimant permanent servant d'aimant d'effacement dont le support est disposé de telle sorte que l'aimant permanent soit mobile directement au-dessus du support d'enregistrement et transversalement au sens de transport de celui-ci où association de l'aimant permanent au support est choisie de telle sorte que l'axe magnétique soit situé dans un plan parallèle au support d'enregistrement et où le mouvement de l'aimant permanent se fait, pour l'essentiel, dans le sens de l'axe de l'aimant, caractérisé par le fait que le support de l'aimant permanent est fonctionellement relié à l'organe d'entraînement (19, 41) du support d'enregistrement (7, 36).

2. Dispositif d'effacement selon la revendication 1, caractérisé par le fait que le support (21) de l'aimant permanent (26) est monté et entraîné de telle sorte qu'il effectue un mouvement oscillant.

3. Dispositif d'effacement selon la revendication 1, caractérisé par le fait que le support (21) de l'aimant permanent (26) est monté à rotation.

4. Dispositif d'effacement selon l'une quelconque des revendications 1 et 3, caractérisé par le fait que, comme aimant permanent, il est fait usage d'un disque (48) en un matériau magnétique, qu'au pourtour du disque (48) sont formées au moins une paire de pôles et que le disque (48) est assemblé de façon centrique, avec un élément d'engrenage (46) situé dans l'assemblage d'entraînement du support d'enregistrement (36).

Fig.1

0 010 644

Fig. 2